# EUROPEAN PATENT SPECIFICATION

(11) **EP 3 517 400 B1**
(45) Date of publication and mention of the grant of the patent: **31.05.2023**
(21) Application number: 19152689.6
(22) Date of filing: 21.01.2019
(51) Int. Cl.: B62B 7/06, B62B 7/08

(54) **FOLDABLE STROLLER**
ZUSAMMENKLAPPBARER KINDERWAGEN
POUSSETTE PLIABLE

(30) Priority: 25.01.2018 CN 201820134098 U
(43) Date of publication of application: 31.07.2019
(73) Proprietor: Ou, Guangquan, Zhongshan, Guangdong 528400 (CN)
(72) Inventor: Ou, Guangquan, Zhongshan, Guangdong 528400 (CN)
(74) Representative: Wang, Bo

(56) References cited:
- EP-A1- 2 949 543
- EP-A1- 3 269 618
- CN-B- 101 607 569
- CN-U- 205 769 520
- US-B1- 9 834 243

## Description

### Field of the Invention

The present patent relates to baby product technologies, and more particularly, to a baby stroller.

### Background of the Invention

With the improvement in living standard, strollers have become necessary for babies since they are pushable and convenient for baby-sitting and more comfortable and safe for babies. However, the baby strollers in the market at present are complicated and most of them are not foldable, so they cannot be stored and carried easily. Though some of them are foldable, the designs are unreasonable and complicated for folding and extending; moreover, they are also inconvenient for carriage due to big sizes and heavy weights even though they can be folded. Therefore, I, the applicant, applied for a utility model patent named "A foldable and contractible stroller"; however, no backrest tubes had been provided for the patent application related stroller.

EP3269618A1 discloses a kind of foldable and carriable trolley consisting of the front wheel group, the rear wheel group, the seat frame and the handlebar. EP2949543A1 discloses a baby carriage, and the frame of the baby carriage comprises a left support frame and a right support frame symmetrical to each other, and a connecting frame connected between the left and right support frames. CN205769520U discloses a kind of foldable portable type children trolley. CN101607569B relates to a baby carrier comprising a frame with an expanded position and folding position. US9834243B1 relates to a collapsible baby carriage which can be first folded into a U-shaped body by exerting a forward-backward force and is then flipped inward to form a flat and rectangular body.

The technical problem to be solved by this patent is to provide a stroller with a more reasonable structure, convenient extending and folding operation and smaller folded size for easy carriage. The main body of this stroller is made based on the technical scheme of the disclosed utility model patent of "A foldable and contractible stroller" involved in the patent application.

The invention is set out in the appended set of claims.

For the present patent, the stroller can be extended and contracted easily through coordination of parts such as grips, handgrip tubes, frame tubes, rear leg tubes, front leg tubes, rear leg supporting tubes, seat-support tubes, backrest tubes, seat-support tube connecting pieces, front leg connecting pieces, front leg supporting tubes, front leg supporting pieces and right / left support tubes. The whole frame is not only foldable from the front and rear parts but also contractible from the left and right sides, realizing a smaller size one after folding. The grips and rear wheels can be set down at the same time after contracting in order to push the stroller directly and easily, especially for elders and women. Backrest tubes are used for the stroller, making it be more comfortable for children. The backrest tubes and other parts of the stroller form a linkage structure, making the stroller be folded easily.

### Brief Introduction of Drawings

Fig. 1 Schematic of the extended utility model;
Fig. 2 Schematic for contracting the utility model;
Fig. 3 Schematic of the contracted utility model;

In these figures: 1 - Grip; 2 - Handgrip tube; 3 - Frame tube; 4 - Rear leg supporting tube; 5 - Rear leg tube; 6 - Armrest seat connecting piece; 7 - Armrest seat; 8 - Seat-support tube; 9 - Seat-support tube connecting piece; 10 - Front leg connecting piece; 11 - Front leg tube; 12 - Front leg supporting tube; 13 - Front leg supporting piece; 14 - Right / left support tube; 15 - Footplate connecting tube; 16 - Footplate; 17 - Backrest tube; 18 - Backrest connecting tube; 19 - Backrest slide sleeve; 20 - Backrest connecting piece; 21 - Seat-support tube fixing piece; 22 - Movable grip joint; 23 - Rotating joint; 24 - L-shaped joint; 25 - Handgrip joint seat; 26 - Handgrip joint; 27 - Front wheel; 28 - Rear wheel; 29 - T-shaped joint seat.

### Detailed Description of the Preferred Embodiment

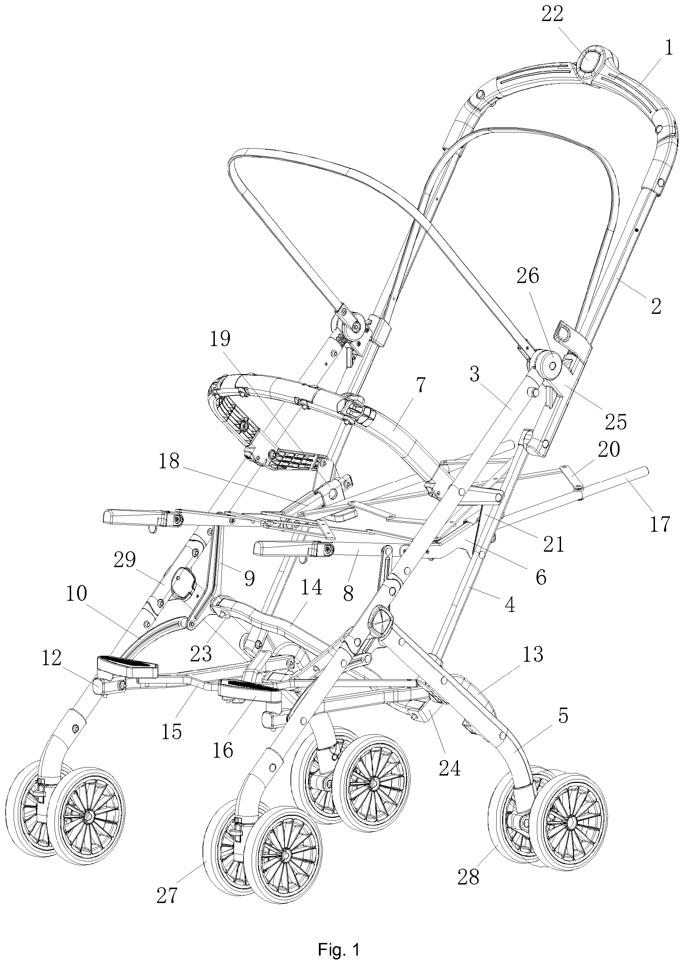

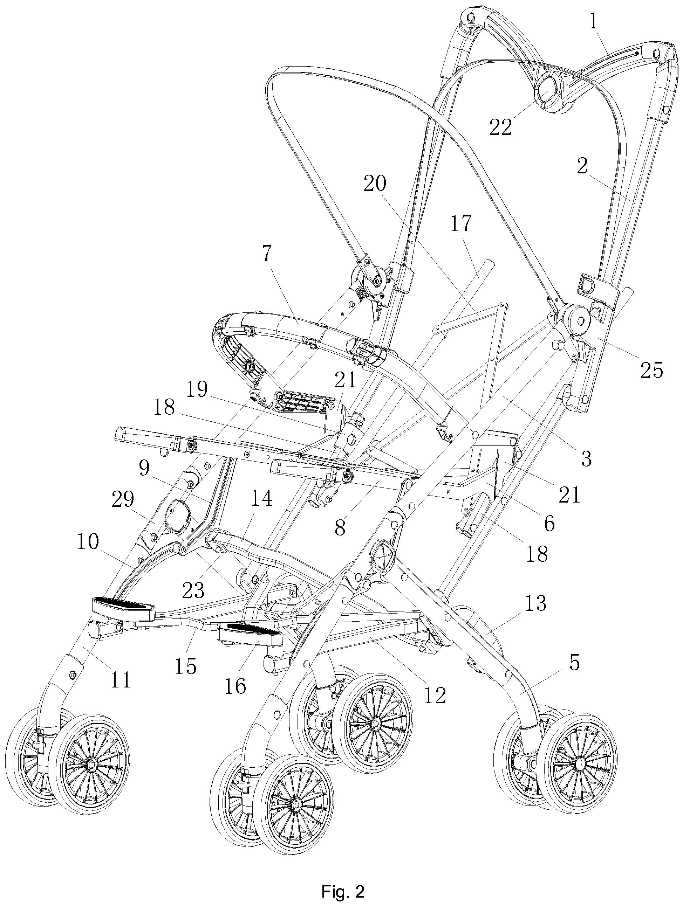

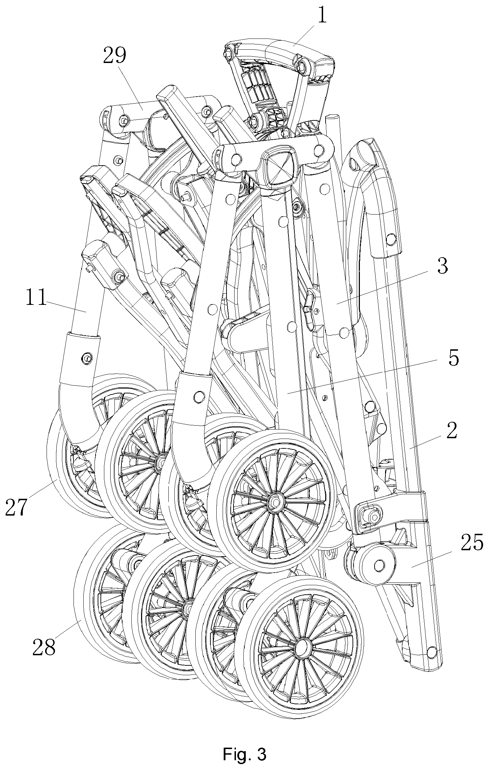

In the present embodiment, according to Fig. 1, 2, and 3, the said foldable, contractible and standing stroller, including the stroller body structure comprising handgrip tubes 2, frame tubes 3, seat-support tubes 8, front leg tubes 11, rear leg tubes 5, backrest tubes 17, front wheels 27, rear wheels 28 as well as movable connections between each seat-support tube 8 and handgrip tube 2 and between each front leg tube 11 and rear leg tube 5, is provided. The rear wheels 28 are installed at the bottom ends of the rear leg tubes 5, and the front wheels 27 are installed at the bottom ends of the front leg tubes 11; The seat-support tubes 8 are movably connected on the rear leg tubes 5; The top ends of the two handgrip tubes 2 are connected with each other via the foldable grips 1; The bottom ends of the handgrip tubes 2 are connected with the handgrip joint seats 25; The rear ends of the frame tubes 3 are connected with the handgrip joints 26 of the handgrip joint seats 25, forming a movable rotating structure; The handgrip joint seats 25 are also connected with rotatable rear leg supporting tubes 4; The front ends of the rear leg supporting tubes 4 are connected with the rear leg tubes 5 via axle pins, forming a rotatable structure; The rear ends of the seat-support tubes 8 are connected with the rear leg supporting tubes 4 via axle pins, forming a rotatable structure; The front section of the seat-support tube 8 is movably connected with the seat-support tube connecting piece 9; The front part of the seat-support tube connecting piece 9 is movably fixed on the rear leg tubes 5 via axle pins, forming a lever structure; The front end of the seat-support tube connecting piece 9 is movably connected with a front leg connecting piece 10; The front end of the front leg connecting piece 10 is connected with the front leg tubes 11 via axle pins, forming a rotatable structure; The seat-support tube connecting piece 9 is connected with the front leg tubes 11 via the front leg connecting piece 10, forming a front leg tube contracting & pulling structure and a extending & supporting structure; The front leg tubes 11 are connected with rotatable front leg supporting tubes 12; The rear ends of the front leg supporting tubes 12 are movably connected with a front leg supporting piece 13 via axle pins; The rear end of the front leg supporting piece 13 is movably connected with the lower part of the rear leg tubes 5 via axle pins; The front leg supporting piece 13 is also connected with rotatable right / left support tubes 14; The other ends of the right / left support tubes 14 are connected with the upper parts of the rear leg tubes 5 at the other side, forming a rotatable structure; The two right / left support tubes 14 form a cross structure.

The front ends of the backrest tubes 17 are movably connected with one backrest connecting tube 18, and the latter 18 is movably connected with a rear leg support tube 4 via an axle pin, forming a pulling structure for supporting the backrest tubes 17 and folding the stroller;

Each said backrest connecting tube 18 is set in a backrest slide sleeve 19, forming a front / rear slide structure; The backrest slide sleeve 19 is fixed on a seat-support tube fixing piece 21. The front end of the seat-support tube fixing piece 21 and the rear part of an armrest seat connecting piece 6 is movably fixed on the rear leg supporting tube 4 via one pin; The rear end of the seat-support tube fixing piece 21 is movably connected with the rear parts of the armrest seats 7; The front end of the armrest seat connecting piece 6 is movably connected with the rear parts of the seat-support tubes 8; The two backrest tubes 17 are connected via the crossed and foldable backrest connecting pieces 20, forming a linkage structure for easy folding of the backrest tubes 17.

The grips 1 at both sides are connected via the middle movable grip joint 22, forming an upward-downward foldable rotating structure.

The said frame tubes 3 and front leg tubes 11 are movably connected to the front and rear ends of a T-shaped joint seat 29, forming a foldable rotating structure, while the rear leg tubes 5 are fixed in the middle of the T-shaped joint seat 29; The folded and contracted front leg tubes 11 and frame tubes 3 are set close to the front and rear of the rear leg tubes 5.

The front ends of the said right / left support tubes 14 are movably connected to a rotating joint 23 via axle pins; The rotating joint 23 and the said seat-support connecting piece 9 are movably installed on the top parts of the rear leg tubes 5 via one pin, realizing multidirectional rotation of the front ends of the right / left support tubes 14; The rear ends of the right / left support tubes 14 are movably connected with an L-shaped joint 24 via axle pins; The L-shaped joint 24 is movably connected with the said front leg supporting pieces 13 via axle pins, realizing multidirectional rotation of the rear ends of the right / left support tubes 14, thus the rear leg tubes 5 can be folded toward the middle under the multidirectional rotation of the right / left support tubes 14, reducing the size after folding. The said seat-support connecting pieces 9, front leg connecting pieces 10 and front leg supporting pieces 13 are bent; Each seat-support connecting piece 9 is a bent structure with two upturned ends, while each front leg connecting piece 10 and front leg supporting piece 13 are bent structures with two downturned ends.

The middle parts of the said armrest seats 7 are movably connected to the frame tubes 3 via axle pins, while the rear ends of the armrest seats 7 are connected with the armrest seat connecting piece 6 via the said seat-support tube fixing piece 21, forming a linkage structure.

The said armrest seat 7 comprises several segments, and consecutive segments, via movable joints, form a foldable structure for realizing a smaller size.

The front ends of the front leg supporting tubes 12 are also connected with the rotatable footplates 16; The other side of each footplate 16 is connected with a footplate connecting tube 15 via an axle pin, forming a rotatable structure; The rear end of each footplate connecting tube 15 is movably connected with the rear part of each front leg supporting tube 12 on the other side via axle pins, forming rotatable structures; The two footplate connecting tubes 15 form a cross structure for folding the front leg tubes 11 toward the middle and reducing the size; The front ends of the front leg supporting tubes 12 and the front leg connecting pieces 10 are fixed on the front leg tubes 11 via one axle pin.

The length of the said front leg tubes 11 is shorter than that of the rear leg tubes 5; The front wheels 27 of the folded stroller are over the rear wheels 28, forming an up-downward folding structure; The rear wheels 28 and the bottom ends of the handgrip joint seats 25 form a supporting structure for keeping the stroller stand on the ground stably; The two footplates 16 can be put together longitudinally through rotation, reducing the size after folding.

Operation process: Extending the folded stroller. Unlock the clamping mechanism of the grip 1 and pull it upward, and then turn them backward through the handgrip tubes 2 to make the frame tubes 3 and rear leg supporting tubes 4 leave the rear leg tubes 5; In the meantime the armrest seats 7 will extend backward through the armrest seat connecting pieces 6 connected to the rear leg supporting tubes 4; The backrest connecting tubes 18 connected to the armrest seat connecting pieces 6 will move forward through the backrest slide sleeves 19 connected to the seat-support tube fixing pieces 21. The seat-support tubes 8 connected to the rear leg supporting tubes 4 in the direction of the backrest tubes 17 will make the front leg tubes 11 leave the rear leg tubes 5 through the linkages between each seat-support tube connecting piece 9 and front leg connecting piece 10; In the meantime the front leg supporting pieces 13 driven by the front leg supporting tubes 12 of the front leg tubes 11 will make the right / left support tubes 14 move backward to extend the frame to the right / left sides; The backrest connecting tubes 18 connected to the armrest seat connecting pieces 6 will make backrest tubes 17 extend to the middle through the backrest connecting pieces 20; In the meantime the footplate connecting tubes 15 connected to the front leg tubes 11 will make the footplates 16 extend and the grip 1 is clamped to be in a locked state, and thus the stroller will be stopped and extended.

Folding the extended stroller. Push the clamps forward (downward) to unlock the grips 1, and then turn them upward through the handgrip tubes 2 to make the frame tubes 3 and rear leg supporting tubes 4 close up to the rear leg tubes 5; In the meantime the armrest seats 7 will contract forward through the armrest seat connecting pieces 6 connected to the rear leg supporting tubes 4; The backrest connecting tubes 18 connected to the armrest seat connecting pieces 6 will move backward through the backrest slide sleeves 19 connected to the seat-support tube fixing pieces 21. The seat-support tubes 8 connected to the rear leg supporting tubes 4 will make the front leg tubes 11 close up to the rear leg tubes 5 through the linkages between each seat-support tube connecting piece 9 and front leg connecting piece 10; In the meantime the front leg supporting pieces 13 driven by the front leg supporting tubes 12 of the front leg tubes 11 will make the right / left support tubes 14 move backward to contract and fold the frame to the middle; The footplate connecting tubes 15 connected to the front leg tubes 11 will make the footplates 16 close up forward; The backrest connecting tubes 18 connected to the armrest seat connecting pieces 6 will make backrest tubes 17 close up to the middle through the backrest connecting pieces 20, and thus the stroller will be stopped and contracted.

## Claims

1. A foldable, contractible and standing baby stroller, comprising handgrip tubes (2), frame tubes (3), seat-support tubes (8), front leg tubes (11), rear leg tubes (5), backrest tubes (17), front wheels (27) and rear wheels (28), the seat-support tubes (8) being indirectly movably
connected with the handgrip tubes (2), front leg tubes (11) and rear leg tubes (5) to form a stroller body structure, the rear wheels (28) being installed at the bottom ends of the rear leg tubes (5), the front wheels (27) being installed at the bottom ends of the front leg tubes (11); and the backrest tubes (17) being movably connected with the seat-support tubes (8),
wherein the top ends of the two handgrip tubes (2) are connected with each other via a foldable grip (1); the bottom ends of the handgrip tubes (2) are connected with handgrip joint seats (25); the rear ends of the frame tubes (3) are connected with joints (26) of the handgrip joint seats (25), forming a rotatable structure; the handgrip joint seats (25) are also connected with rotatable rear leg supporting tubes (4); the front ends of the rear leg supporting tubes (4) are connected with the rear leg tubes (5) via axle pins, forming a rotatable structure;
the rear ends of the seat-support tubes (8) are connected with the rear leg supporting tubes (4) via axle pins, forming a rotatable structure; the front sections of the seat-support tubes (8) are movably connected with seat-support tube connecting pieces (9); the front part of the seat-support tube connecting pieces (9) are movably mounted on the rear leg tubes (5) via axle pins, forming a lever structure; the front ends of the seat-support tube connecting pieces (9) are movably connected with front leg connecting pieces (10); the front ends of the front leg connecting pieces (10) are connected with the front leg tubes (11) via axle pins, forming a rotatable structure; the seat-support tube connecting pieces (9) are connected with the front leg tubes (11) via the front leg connecting pieces (10), forming a front leg tube contracting and pulling structure and a extending and supporting structure; the front leg tubes (11) are connected with rotatable front leg supporting tubes (12); the rear ends of the front leg supporting tubes (12) are movably connected with front leg supporting pieces (13) via axle pins; the rear end of the front leg supporting pieces (13) are movably connected with the lower part of the rear leg tubes (5) via axle pins; the front leg supporting pieces (13) are also connected with rotatable right / left support tubes (14); the other ends of the right / left support tubes (14) are connected with the upper parts of the rear leg tubes (5) at the other side, forming a rotatable structure; the two right / left support tubes (14) forming a cross structure; each backrest connecting tube (18) is set in backrest slide sleeve (19), forming a front / rear slide structure that is fixed on seat-support tube fixing pieces (21); the front end of the seat-support tube fixing pieces (21) and a rear part of armrest seat connecting pieces (6) are movably mounted on the rear leg supporting tubes (4) via axle pins; the rear end of the seat-support tube fixing pieces (21) is movably connected with the rear part of armrest seats (7); the front end of the armrest seat connecting pieces (6) are movably connected with the rear parts of the seat-support tubes (8);
**characterized in that**,
the front ends of the backrest tubes (17) are movably connected with the backrest connecting tubes (18), wherein the backrest connecting tubes (18) are movably connected with rear leg supporting tubes (4) to form a pulling structure for supporting the backrest tubes (17) and folding the stroller, wherein the rear leg supporting tubes (4) connect the handgrip tube (2) and the rear leg tube (5), the two backrest tubes (17) are connected via crossed and foldable backrest connecting pieces (20), forming a linkage structure.

2. A foldable, contractible and standing stroller as claimed in claim 1, wherein the grips (1) at both sides are connected via a middle movable grip joint (22), forming an upward-downward foldable rotating structure.

3. A foldable, contractible and standing stroller as claimed in claim 2, wherein the frame tubes (3) and front leg tubes (11) are movably connected to the front and rear ends of a T-shaped joint seat (29), forming a foldable rotating structure, while the rear leg tubes (5) are fixed in the middle of the T-shaped joint seat (29); when the stroller is in a folded state, the front leg tubes (11) and frame tubes (3) are on the front and rear sides of the rear leg tubes (5), respectively.

4. A foldable, contractible and standing stroller as claimed in claim 3, wherein the front ends of the right / left support tubes (14) are movably connected to a rotating joint (23) via axle pins; the rotating joint (23) and the said seat-support tube connecting piece (9) are movably installed on the top parts of the rear leg tubes (5) via an axle pin, realizing multidirectional rotation of the front ends of the right / left support tubes (14); the rear ends of the right / left support tubes (14) are movably connected with an L-shaped joint (24) via axle pins; the L-shaped joint (24) is movably connected with the said front leg supporting pieces (13) via axle pins, realizing multidirectional rotation of the rear ends of the right / left support tubes (14).

5. A foldable, contractible and standing stroller as claimed in claim 4, wherein the said seat-support tube connecting pieces (9), front leg connecting pieces (10) and front leg supporting pieces (13) have bent shapes; each seat-support tube connecting piece (9) has a bent structure with two upturned ends, while each front leg connecting piece (10) and front leg supporting piece (13) have bent structures with two downturned ends.

6. A foldable, contractible and standing stroller as claimed in claim 1, wherein the middle parts of the said armrest seats (7) are movably connected to the frame tubes (3) via axle pins, while the rear ends of the armrest seats (7) are connected with the armrest seat connecting piece (6) via the said seat-support tube fixing piece (21), forming a linkage structure.

7. A foldable, contractible and standing stroller as claimed in claim 6, wherein the said armrest seat (7) comprises several segments, and consecutive segments form a foldable structure via movable joints.

8. A foldable, contractible and standing stroller as claimed in claim 1, wherein the front ends of the front leg supporting tubes (12) are also connected with rotatable footplates (16); the other side of each footplate (16) is connected with a footplate connecting tube (15) via an axle pin, forming a rotatable structure; the rear end of each footplate connecting tube (15) is movably connected with the rear part of each front leg supporting tube (12) on the other side via axle pins, forming rotatable structures; the two footplate connecting tubes (15) form a cross structure; the front ends of the front leg supporting tubes (12) and the front leg connecting pieces (10) are fixed on the front leg tubes (11) via one axle pin.

## Patentansprüche

1. Zusammenklappbarer, zusammenziehbarer und stehender Kinderwagen, umfassend Handgriffrohre (2), Rahmenrohre (3), Sitzstützrohre (8), vordere Beinrohre (11), hintere Beinrohre (5), Rückenlehnenrohre (17), Vorderräder (27) und Hinterräder (28), wobei die Sitzstützrohre (8) indirekt beweglich mit den Handgriffrohren (2), den vorderen Beinrohren (11) und den hinteren Beinrohren (5) verbunden sind, um eine Kinderwagenkörperstruktur zu bilden, wobei die Hinterräder (28) an den unteren Enden der hinteren Beinrohre (5) angebracht sind, die Vorderräder (27) an den unteren Enden der vorderen Beinrohre (11) angebracht sind; und wobei die Rückenlehnenrohre (17) beweglich mit den Sitzstützrohren (8) verbunden sind,
wobei die oberen Enden der zwei Handgriffrohre (2) über einen klappbaren Griff (1) miteinander verbunden sind; die unteren Enden der Handgriffrohre (2) mit Handgriffgelenksitzen (25) verbunden sind; die hinteren Enden der Rahmenrohre (3) mit Gelenken (26) der Handgriffgelenksitze (25) verbunden sind, wodurch eine Drehstruktur gebildet wird; die Handgriffgelenksitze (25) auch mit drehbaren hinteren Beinstützrohren (4) verbunden sind; die vorderen Enden der hinteren Beinstützrohre (4) über Achsstifte mit den hinteren Beinrohren (5) verbunden sind, wodurch eine Drehstruktur gebildet wird;
die hinteren Enden der Sitzstützrohre (8) über Achsstifte mit den hinteren Beinstützrohren (4) verbunden sind, wodurch eine Drehstruktur gebildet wird; die vorderen Bereiche der Sitzstützrohre (8) beweglich mit Sitzstützrohr-Verbindungsstücken (9) verbunden sind; der vordere Teil der Sitzstützrohr-Verbindungsstücke (9) über Achsstifte beweglich an den hinteren Beinrohren (5) montiert ist, wodurch eine Hebelstruktur gebildet wird; die vorderen Enden der Sitzstützrohr-Verbindungsstücke (9) beweglich mit den vorderen Beinverbindungsstücken (10) verbunden sind; die vorderen Enden der vorderen Beinverbindungsstücke (10) über Achsstifte mit den vorderen Beinrohren (11) verbunden sind, wodurch eine Drehstruktur gebildet wird; die Sitzstützrohr-Verbindungsstücke (9) über die vorderen Beinverbindungsstücke (10) mit den vorderen Beinrohren (11) verbunden sind, wodurch eine vordere Beinrohr-Kontrahier- und -Ziehstruktur und eine Verlängerungs- und Stützstruktur gebildet wird; die vorderen Beinrohre (11) mit drehbaren vorderen Beinstützstücken (12) verbunden sind; die hinteren Enden der vorderen Beinstützstücke (12) über Achsstifte mit vorderen Beinstützstücken (13) beweglich verbunden sind; das hintere Ende der vorderen Beinstützstücke (13) über Achsstifte mit dem unteren Teil der hinteren Beinrohre (5) beweglich verbunden ist; die vorderen Beinstützteile (13) ebenfalls mit drehbaren rechten/linken Stützrohren (14) verbunden sind; die anderen Enden der rechten/linken Stützrohre (14) mit den oberen Teilen der hinteren Beinrohre (5) auf der anderen Seite verbunden sind, wodurch eine Drehstruktur gebildet wird; wobei die zwei rechten/linken Stützrohre (14) eine Kreuzstruktur bilden;
wobei jedes Rückenlehnen-Verbindungsrohr (18) in einer Rückenlehnen-Gleithülse (19) eingesetzt ist, wodurch eine vordere/hintere Gleitstruktur gebildet wird, die an Sitzstützrohr-Befestigungsstücken (21) fixiert ist; das vordere Ende der Sitzstützrohr-Befestigungsstücke (21) und ein hinterer Teil der Armlehnensitz-Verbindungsstücke (6) über Achsstifte beweglich an den hinteren Beinstützrohren (4) montiert sind; das hintere Ende der Sitzstützrohr-Befestigungsstücke (21) beweglich mit dem hinteren Teil der Armlehnensitze (7) verbunden ist; das vordere Ende der Armlehnensitz-Verbindungsstücke (6) beweglich mit den hinteren Teilen der Sitzstützrohre (8) verbunden ist;
**dadurch gekennzeichnet, dass**
die vorderen Enden der Rückenlehnenrohre (17) beweglich mit den Rückenlehnen-Verbindungsrohren (18) verbunden sind, wobei die Rückenlehnen-Verbindungsrohre (18) beweglich mit den hinteren Beinstützrohren (4) verbunden sind, um eine Ziehstruktur zum Stützen der Rückenlehnenrohre (17) und Zusammenklappen des Kinderwagens zu bilden, wobei die hinteren Beinstützrohre (4) das Handgriffrohr (2) und das hintere Beinrohr (5) verbinden, die zwei Rückenlehnenrohre (17) über gekreuzte und klappbare Rückenlehnen-Verbindungsstücke (20) verbunden sind, wodurch eine Gestänge-Struktur gebildet wird.

2. Zusammenklappbarer, zusammenziehbarer und stehender Kinderwagen nach Anspruch 1, wobei die Griffe (1) an beiden Seiten über ein mittleres bewegliches Griffgelenk (22) verbunden sind, wodurch eine nach oben und nach unten klappbare Drehstruktur gebildet wird.

3. Zusammenklappbarer, zusammenziehbarer und stehender Kinderwagen nach Anspruch 2, wobei die Rahmenrohre (3) und die vorderen Beinrohre (11) beweglich mit dem vorderen und hinteren Ende eines T-förmigen Gelenksitzes (29) verbunden sind, wodurch eine zusammenklappbare Drehstruktur gebildet wird, während die hinteren Beinrohre (5) in der Mitte des T-förmigen Gelenksitzes (29) fixiert sind; wenn sich der Kinderwagen in einem zusammengeklappten Zustand befindet, befinden sich die vorderen Beinrohre (11) und die Rahmenrohre (3) an der vorderen bzw. hinteren Seite der hinteren Beinrohre (5).

4. Zusammenklappbarer, zusammenziehbarer und stehender Kinderwagen nach Anspruch 3, wobei die vorderen Enden der rechten/linken Stützrohre (14) über Achsstifte beweglich mit einem Drehgelenk (23) verbunden sind; das Drehgelenk (23) und das Sitzstützrohr-Verbindungsstück (9) über einen Achsstift beweglich an den oberen Teilen der hinteren Beinrohre (5) angebracht sind, wodurch eine multidirektionale Drehung der vorderen Enden der rechten/linken Stützrohre (14) hergestellt wird; die hinteren Enden der rechten/linken Stützrohre (14) über Achsstifte beweglich mit einem L-förmigen Gelenk (24) verbunden sind; das L-förmige Gelenk (24) über Achsstifte beweglich mit den vorderen Beinstützstücken (13) verbunden ist, wodurch eine multidirektionale Drehung der hinteren Enden der rechten/linken Stützrohre (14) hergestellt wird.

5. Zusammenklappbarer, zusammenziehbarer und stehender Kinderwagen nach Anspruch 4, wobei die Sitzstützrohr-Verbindungsstücke (9), die vorderen Beinverbindungsstücke (10) und die vorderen Beinstützstücke (13) gebogene Formen aufweisen; jedes Sitzstützrohr-Verbindungsstück (9) eine gebogene Struktur mit zwei nach oben gerichteten Enden aufweist, während jedes vordere Beinverbindungsstück (10) und vordere Beinstützstück (13) gebogene Strukturen mit zwei nach unten gerichteten Enden aufweisen.

6. Zusammenklappbarer, zusammenziehbarer und stehender Kinderwagen nach Anspruch 1, wobei die mittleren Teile der Armlehnensitze (7) über Achsstifte beweglich mit den Rahmenrohren (3) verbunden sind, während die hinteren Enden der Armlehnensitze (7) über das Sitzstützrohr-Befestigungsstück (21) mit dem Armlehnensitz-Verbindungsstück (6) verbunden sind, wodurch eine Gestänge-Struktur gebildet wird.

7. Zusammenklappbarer, zusammenziehbarer und stehender Kinderwagen nach Anspruch 6, wobei der Armlehnensitz (7) mehrere Segmente umfasst und aufeinanderfolgende Segmente über bewegliche Gelenke eine zusammenklappbare Struktur bilden.

8. Zusammenklappbarer, zusammenziehbarer und stehender Kinderwagen nach Anspruch 1, wobei die vorderen Enden der vorderen Beinstützrohre (12) ebenfalls mit drehbaren Fußplatten (16) verbunden sind; die andere Seite jeder Fußplatte (16) über einen Achsstift mit einem Fußplatten-Verbindungsrohr (15) verbunden ist, wodurch eine Drehstruktur gebildet wird; das hintere Ende jedes Fußplatten-Verbindungsrohrs (15) über Achsstifte beweglich mit dem hinteren Teil jedes vorderen Beinstützrohrs (12) auf der anderen Seite verbunden ist, wodurch Drehstrukturen gebildet werden; die zwei Fußplatten-Verbindungsrohre (15) eine Kreuzstruktur bilden; die vorderen Enden der vorderen Beinstützrohre (12) und die vorderen Beinverbindungsstücke (10) über einen Achsstift an den vorderen Beinrohren (11) fixiert sind.

## Revendications

1. Poussette de bébé pliable, rétractable et debout, comprenant des tubes de poignée (2), des tubes de cadre (3), des tubes de support de siège (8), des tubes de jambe avant (11), des tubes de jambe arrière (5), des tubes de dossier (17), des roues avant (27) et des roues arrière (28), les tubes de support de siège (8) étant reliés indirectement de manière mobile aux tubes de poignée (2), aux tubes de jambe avant (11) et aux tubes de jambe arrière (5) pour former une structure de corps de poussette, les roues arrière (28) étant installées aux extrémités inférieures des tubes de jambe arrière (5), les roues avant (27) étant installées aux extrémités inférieures des tubes de jambe avant (11) ; et les tubes de dossier (17) étant reliés de manière mobile aux tubes de support de siège (8),
dans laquelle les extrémités des deux tubes de poignée (2) sont reliées l'une à l'autre via une poignée pliable (1) ; les extrémités inférieures des tubes de poignée (2) sont reliées à des sièges d'articulation de poignée (25) ; les extrémités arrière des tubes de cadre (3) sont reliées à des articulations (26) des sièges d'articulation de poignée (25), en formant une structure rotative ; les sièges d'articulation de poignée (25) sont également reliés à des tubes de support de jambe arrière (4) rotatifs ; les extrémités avant des tubes de support de jambe arrière (4) sont reliées aux tubes de jambe arrière (5) via des axes d'essieu, formant une structure rotative ;
les extrémités arrière des tubes de support de siège (8) sont reliées aux tubes de support de jambe arrière (4) via des axes d'essieu, en formant une structure rotative ; les sections avant des tubes de support de siège (8) sont reliées de manière mobile à des pièces de liaison de tubes de support de siège (9) ; la partie avant des pièces de liaison de tubes de support de siège (9) est montée de manière mobile sur les tubes de jambe arrière (5) via des axes d'essieu, en formant une structure de levier ; les extrémités avant des pièces de liaison de tubes de support de siège (9) sont reliées de manière mobile à des pièces de liaison de jambe avant (10) ; les extrémités avant des pièces de liaison de jambe avant (10) sont reliées aux tubes de jambe avant (11) via des axes d'essieu, en formant une structure rotative ; les pièces de liaison de tubes de support de siège (9) sont reliées aux tubes de jambe avant (11) via les pièces de liaison de jambe avant (10), en formant une structure de rétraction et de tirage de tubes de jambe avant et une structure d'extension et de support ; les tubes de jambe avant (11) sont reliés à des tubes de support de jambe avant (12) rotatifs ; les extrémités arrière des tubes de support de jambe avant (12) sont reliées de manière mobile à des pièces de support de jambe avant (13) via des axes d'essieu ; l'extrémité arrière des pièces de support de jambe avant (13) est reliée de manière mobile à la partie inférieure des tubes de jambe arrière (5) via des axes d'essieu ; les pièces de support de jambe avant (13) sont également reliées à des tubes de support droit et gauche (14) rotatifs ; les autres extrémités des tubes de support droit et gauche (14) sont reliées aux parties supérieures des tubes de jambe arrière (5) de l'autre côté, en formant une structure rotative ; les deux tubes de support droit et gauche (14) formant une structure en croix ;
chaque tube de liaison de dossier (18) est placé dans un manchon de coulissement de dossier (19), en formant une structure de coulissement avant et arrière qui est fixée sur des pièces de fixation de tubes de support de siège (21) ; l'extrémité avant des pièces de fixation de tubes de support de siège (21) et une partie arrière de pièces de liaison de siège d'accoudoir (6) sont montées de manière mobile sur les tubes de support de jambe arrière (4) via des axes d'essieu ; l'extrémité arrière des pièces de fixation de tubes de support de siège (21) est reliée de manière mobile à la partie arrière des sièges d'accoudoir (7) ; l'extrémité avant des pièces de liaison de siège d'accoudoir (6) est reliée de manière mobile aux parties arrières des tubes de support de siège (8) ;
**caractérisée en ce que**,
les extrémités avant des tubes de dossier (17) sont reliées de manière mobile aux tubes de liaison de dossier (18), dans laquelle les tubes de liaison de dossier (18) sont reliés de manière mobile à des tubes de support de jambe arrière (4) pour former une structure de tirage pour supporter les tubes de dossier (17) et plier la poussette, dans laquelle les tubes de support de jambe arrière (4) relient le tube de poignée (2) et le tube de jambe arrière (5), les deux tubes de dossier (17) sont reliés via des pièces de liaison de dossier croisées et pliables (20), en formant une structure de raccordement.

2. Poussette de bébé pliable, rétractable et debout selon la revendication 1, dans laquelle les poignées (1) des deux côtés sont reliées via une articulation de poignée mobile centrale (22) en formant une structure rotative pliable vers le haut et vers le bas.

3. Poussette de bébé pliable, rétractable et debout selon la revendication 2, dans laquelle les tubes de cadres (3) et les tubes de jambe avant (11) sont reliés de manière mobile aux extrémités avant et arrière d'un siège d'articulation en forme de T (29), en formant une structure rotative pliable, alors que les tubes de jambe arrière (5) sont fixés au milieu du siège d'articulation en forme de T (29) ; lorsque la poussette est dans un état plié, les tubes de jambe avant (11) et les tubes de cadre (3) sont respectivement sur les côtés avant et arrière des tubes de jambe arrière (5).

4. Poussette de bébé pliable, rétractable et debout selon la revendication 3, dans laquelle les extrémités avant des tubes de support droit et gauche (14) sont reliées de manière mobile à une articulation rotative (23) via des axes d'essieu ; l'articulation rotative (23) et ladite pièce de liaison de tubes de support de siège (9) sont installées de manière mobile sur les parties supérieures des tubes de jambe arrière (5) via un axe d'essieu, en réalisant une rotation multidirectionnelle des extrémités avant des tubes de support droit et gauche (14) ; les extrémités arrière des tubes de support droit et gauche (14) sont reliées de manière mobile à une articulation en forme de L (24) via des axes d'essieu ; l'articulation en forme de L (24) est reliée de manière mobile auxdites pièces de support de jambe avant (13) via des axes d'essieu, en réalisant une rotation multidirectionnelle des extrémités arrière des tubes de support droit et gauche (14).

5. Poussette de bébé pliable, rétractable et debout selon la revendication 4, dans laquelle lesdites pièces de liaison de tubes de support de siège (9), lesdites pièces de liaison de jambe avant (10) et lesdites pièces de support de jambe avant (13) présentent des formes incurvées ; chaque pièce de liaison de tubes de support de siège (9) présente une structure incurvée avec deux extrémités tournées vers le haut, alors que chaque pièce de liaison de jambe avant (10) et chaque pièce de support de jambe avant (13) présentent des structures incurvées avec deux extrémités tournées vers le bas.

6. Poussette de bébé pliable, rétractable et debout selon la revendication 1, dans laquelle les parties centrales desdits sièges d'accoudoir (7) sont reliées de manière mobile aux tubes de cadre (3) via des axes d'essieu, alors que les extrémités arrière des sièges d'accoudoir (7) sont reliées à la pièce de liaison de siège d'accoudoir (6) via ladite pièce de fixation de tubes de support de siège (21) en formant une structure de raccordement.

7. Poussette de bébé pliable, rétractable et debout selon la revendication 6, dans laquelle ledit siège d'accoudoir (7) comprend plusieurs segments, et des segments consécutifs forment une structure pliable via des articulations mobiles.

8. Poussette de bébé pliable, rétractable et debout selon la revendication 1, dans laquelle les extrémités avant des tubes de support de jambe avant (12) sont également reliées à des repose-pieds (16) rotatifs ; l'autre côté de chaque repose-pieds (16) est relié à un tube de liaison de repose-pieds (15) via un axe d'essieu, en formant une structure rotative ; l'extrémité arrière de chaque tube de liaison de repose-pieds (15) est reliée de manière mobile à la partie arrière de chaque tube de support de jambe avant (12) de l'autre côté via des axes d'essieu, en formant des structures rotatives ; les deux tubes de liaison de repose-pieds (15) forment une structure en croix ; les extrémités avant des tubes de support de jambe avant (12) et les pièces de liaison de jambe avant (10) sont fixées sur les tubes de jambe avant (11) via un axe d'essieu.
